# FASCICULE DE BREVET EUROPEEN

(11) **EP 2 537 747 B1**
(45) Date de publication et mention de la délivrance du brevet: **28.05.2014**
(21) Numéro de dépôt: 12172343.1
(22) Date de dépôt: 18.06.2012
(51) Int. Cl.: B64C 11/00, F01D 5/02, F16F 15/36

(54) **Système propulsif à hélices contrarotatives non carénées et son procédé d'équilibrage**
Antriebssystem mit gegenläufigem offenen Rotor und Ausgleichsverfahren dafür
Propulsion system with contrarotating open rotors and its balancing method

(30) Priorité: 22.06.2011 FR 1155507
(43) Date de publication de la demande: 26.12.2012
(73) Titulaire: Airbus Opérations SAS, 31060 Toulouse (FR)
(72) Inventeur: Quiroz-Hernandez, Esteban, 31100 Toulouse (FR)
(74) Mandataire: Gevers France

(56) Documents cités:
- WO-A2-2008/127362

## Description

La présente invention concerne un procédé d'équilibrage pour un système propulsif à hélices contrarotatives coaxiales non carénées.

On sait que, dans un tel système propulsif, généralement appelé CROR (pour « Contra-Rotating Open Rotor » en langue anglo-saxonne), chaque hélice comporte un moyeu entouré concentriquement par une enveloppe de moyeu, elle-même pourvue d'une paroi externe. Dans ce type de système propulsif, le centre de gravité de chaque hélice est susceptible d'être écarté de son axe de rotation, ce qui résulte, lors de la rotation de celle-ci, en un phénomène de balourd radial. Or, un tel balourd est susceptible d'engendrer des vibrations mécaniques qui peuvent être transmises à un équipement - en particulier la nacelle d'un aéronef accueillant des passagers - auquel le système propulsif est fixé, ce qui peut être désagréable pour ceux-ci.

Afin d'éliminer (ou à tout le moins réduire) cet éventuel balourd radial, il est déjà connu de rapporter un ensemble de masselottes, dont les masses sont choisies de façon adéquate, à des emplacements prévus sur le système propulsif, de manière à positionner le centre de gravité de chacune des hélices sur l'axe de rotation et ainsi équilibrer ledit système propulsif.

Toutefois, lorsque le système propulsif est en conditions de vol, les pales des hélices sont soumises à un ensemble de forces aérodynamiques (de poussée et de résistance) axiales susceptibles d'engendrer des forces et des moments additionnels, ce qui déséquilibre le système propulsif.

Afin que l'équilibrage du système propulsif s'adapte à ces conditions de vol, il est également connu de modifier en temps réel la position angulaire des masselottes. De cette manière, le système propulsif peut être équilibré à chaque instant. De plus, on remarquera que ce type d'équilibrage permet, par rapport à un équilibrage passif, de déterminer plus facilement si une hélice est dégradée.

Un exemple d'un tel équilibrage adaptatif, pour un système propulsif à une unique hélice non carénée, est décrit dans le document WO 2008/127362. Dans ce document, deux anneaux balourdés, coaxiaux à l'enveloppe de moyeu et aptes à tourner solidairement avec l'hélice correspondante, sont chacun équipés d'un ensemble d'aimants permanents répartis régulièrement sur leur circonférence. La position angulaire de chaque anneau peut être ajustée au moyen de bobines magnétiques qui génèrent un champ magnétique apte à interagir avec lesdits aimants permanents. La position angulaire relative entre les anneaux balourdés détermine alors le balourd total d'équilibrage.

Si le procédé d'équilibrage décrit dans ce document antérieur convient pour un système propulsif à une unique hélice non carénée, son adaptation à un système propulsif à plusieurs hélices contrarotatives coaxiales non carénées présente l'inconvénient d'augmenter la masse de celui-ci. En effet, d'une part, dans ce type de système propulsif, le diamètre des moyeux est élevé, ce qui nécessite que le diamètre des anneaux et le nombre d'aimants permanents qui leurs sont joints - et donc leurs masses - soient élevés. D'autre part, dans ce type de système propulsif, l'hélice arrière doit être supportée par l'hélice avant, et non par une structure fixe du système propulsif, ce qui implique qu'aucune structure fixe n'est adjacente à ladite hélice arrière et que les bobines magnétiques ne peuvent donc être disposées au plus près de celle-ci, de sorte que l'équilibrage adaptif décrit dans ce document antérieur ne peut être réalisé sur ladite hélice arrière.

En outre, on remarquera que les bobines magnétiques, jointes à la structure fixe du système propulsif, constituent des masses additionnelles qui ne participent pas directement à l'équilibrage dudit système propulsif.

L'objet de la présente invention est de remédier à ces inconvénients.

La présente invention propose un procédé d'équilibrage d'un système propulsif tel que défini par la revendication 1 et un système propulsif comme défini par la revendication 11.

A cette fin, le procédé d'équilibrage d'un système propulsif à au moins deux hélices contrarotatives coaxiales non carénées, chacune desdites hélices comportant un moyeu entouré concentriquement par une enveloppe de moyeu et chacune desdites enveloppes de moyeu étant pourvue d'une paroi externe, procédé d'équilibrage selon lequel, pour éliminer, ou à tout le moins réduire, un éventuel balourd dudit système propulsif, on rapporte des masselottes à des emplacements prévus sur celui-ci, est remarquable en ce qu'au moins l'une desdites masselottes est montée mobile sur une coulisse de guidage coaxiale à l'enveloppe de moyeu correspondante, le déplacement de ladite masselotte mobile le long de ladite coulisse de guidage étant commandé en fonction d'une estimation de l'éventuel balourd dudit système propulsif.

Ainsi, grâce à la présente invention, la masse additionnelle spécifiquement dédiée à l'équilibrage du système propulsif est réduite. En effet, les masselottes mobiles, qui peuvent être en nombre limité de fait de leur mobilité le long d'une coulisse de guidage coaxiale à l'axe des hélices, remplacent avantageusement une pluralité d'aimants permanents et de bobines magnétiques engendrant une masse additionnelle particulièrement élevée.

Par ailleurs, on remarquera que, au contraire des bobines magnétiques, les masselottes mobiles participent directement à l'équilibrage, ce qui permet donc de limiter la masse additionnelle qui ne participe qu'indirectement audit équilibrage.

En outre, grâce encore à la présente invention, les masselottes mobiles peuvent être disposées directement sur l'enveloppe de moyeu de chaque hélice, qui constitue une partie tournante. L'équilibrage des hélices peut donc être opéré en ne disposant que des éléments sur les parties tournantes du système propulsif, et non pas sur une structure fixe adjacente aux hélices, ce qui permet donc d'équilibrer les deux hélices, en particulier l'hélice arrière.

La coulisse de guidage peut comprendre une nervure pratiquée sur la paroi externe de l'enveloppe de moyeu correspondante, en vue de faciliter le déplacement de la masselotte mobile le long de cette nervure.

Afin d'éviter que la masselotte mobile se désolidarise de la coulisse de guidage sous l'effet de forces tangentielles, ladite coulisse de guidage peut présenter des renfoncements latéraux, tandis que ladite masselotte mobile peut comprendre des moyens de maintien de celle-ci à l'intérieur desdits renfoncements latéraux.

Selon un mode de réalisation particulier de la présente invention, ladite coulisse de guidage peut être pourvue d'une crémaillère et ladite masselotte mobile peut comprendre un pignon apte à être engrené avec ladite crémaillère, de manière que, par l'intermédiaire de ladite crémaillère, la rotation dudit pignon entraîne le déplacement de ladite masselotte mobile le long de ladite coulisse de guidage. Ainsi, par l'intermédiaire du pignon prévu sur ladite masselotte mobile, il est possible de commander le déplacement de celle-ci le long de ladite coulisse de guidage.

Dans ce cas, pour commander la rotation dudit pignon, ladite masselotte mobile peut comprendre une vis sans fin supportée par un arbre d'entraînement et apte à être engrenée avec ledit pignon, de manière que, par l'intermédiaire de ladite vis sans fin, la rotation dudit arbre d'entraînement entraîne celle dudit pignon.

La vis sans fin peut être entraînée par un moteur électrique. La source électrique peut, par exemple, être apte à prélever une partie de l'énergie électrique générée par le système antigivre de l'hélice correspondante.

Le déplacement de ladite masselotte mobile le long de ladite coulisse de guidage étant commandé, conformément à la présente invention, en fonction d'un éventuel balourd dudit système propulsif, ce déplacement peut être commandé par des moyens de commande aptes à recevoir des informations sur l'éventuel balourd dudit système propulsif, à déterminer la position de chaque masselotte mobile de façon à éliminer, ou à tout le moins réduire, ledit éventuel balourd et à transmettre à chaque masselotte mobile l'ordre de déplacement correspondant.

Afin que la position de ladite masselotte mobile puisse être déterminé au cours de son déplacement, il peut être prévu, d'une part, que la paroi externe de ladite enveloppe de moyeu soit pourvue d'une graduation angulaire, et, d'autre part, que ladite masselotte mobile comprenne un lecteur de ladite graduation angulaire.

De préférence, deux desdites masselottes sont montées mobiles sur une coulisse de guidage coaxiale à l'enveloppe de moyeu correspondante, les déplacements respectifs desdites masselottes mobiles le long de ladite coulisse de guidage étant commandés en fonction d'une estimation de l'éventuel balourd dudit système propulsif. Ainsi, les déplacements relatifs desdites masselottes mobiles permettent d'équilibrer de façon précise ledit système propulsif.

La présente invention concerne également un système propulsif à au moins deux hélices contrarotatives coaxiales non carénées, chacune desdites hélices comportant un moyeu entouré concentriquement par une enveloppe de moyeu et chacune desdites enveloppes de moyeu étant pourvue d'une paroi externe, ledit système propulsif comprenant des masselottes rapportées à des emplacements prévus sur celui-ci, pour éliminer, ou à tout le moins réduire, un éventuel balourd dudit système propulsif, remarquable en ce qu'au moins l'une desdites masselottes est montée mobile sur une coulisse de guidage coaxiale à l'enveloppe de moyeu correspondante, le déplacement de ladite masselotte mobile le long de ladite coulisse de guidage étant commandé en fonction d'une estimation de l'éventuel balourd dudit système propulsif.

Les figures du dessin annexé feront bien comprendre comment l'invention peut être réalisée. Sur ces figures, des références identiques désignent des éléments techniques semblables.

La figure 1 est une vue schématique et partielle en coupe d'un système propulsif à hélices contrarotatives coaxiales non carénées, muni d'un ensemble de masselottes mobiles conformément à la présente invention.

La figure 2 est une vue en coupe axiale d'une masselotte montée mobile sur une coulisse de guidage ménagée sur l'enveloppe de moyeu correspondante, dans un plan passant par ladite masselotte mobile.

La figure 3 est une vue en coupe transversale de la masselotte mobile de la figure 2, dans un plan passant par la coulisse de guidage.

Les figures 4A et 4B sont respectivement deux vues en coupe transversale d'une coulisse de guidage recevant deux masselottes mobiles, dans un plan passant par ladite coulisse de guidage, pour deux positions relatives différentes desdites masselottes mobiles.

La figure 5 est une vue schématique et partielle d'un aéronef équipé d'au moins un système propulsif tel que celui représenté sur la figure 1.

La figure 6 est une vue schématique et partielle en coupe d'une enveloppe de moyeu de la figure 1, selon un mode particulier de réalisation de l'invention.

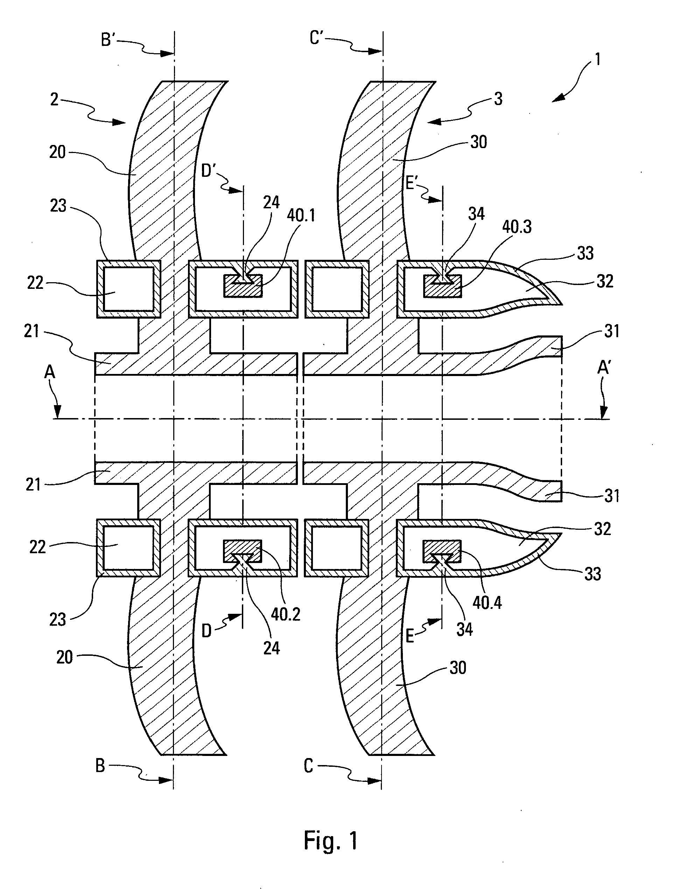

Le système propulsif 1, représenté sur la figure 1, comprend deux hélices non carénées, respectivement une hélice avant 2 et une hélice arrière 3, agencées pour tourner autour d'un axe commun A-A', dans des sens de rotation opposés. L'hélice avant 2 comporte une pluralité de pales 20 (dont deux seulement sont représentées sur la figure 1), disposées dans un plan B-B' (orthogonal à l'axe A-A') qui forme le plan de l'hélice 2, ainsi qu'un moyeu 21 entouré concentriquement par une enveloppe de moyeu 22. De même, l'hélice arrière 3 comporte une pluralité de pales 30 (dont deux seulement sont représentées sur la figure 1), disposées dans un plan C-C' (orthogonal à l'axe A-A') qui forme le plan de l'hélice 3, ainsi qu'un moyeu 31 entouré concentriquement par une enveloppe de moyeu 32. Les enveloppes de moyeu 22 et 32 sont creuses et pourvues respectivement de parois externes 23 et 33.

Conformément à la présente invention, afin d'éliminer - ou à tout le moins de réduire - un éventuel balourd dû à un décalage du centre de gravité de chaque hélice par rapport à l'axe de rotation A-A', on dispose, à des emplacements prévus sur les enveloppes de moyeu 22 et 32, de façon coaxiale audit axe de rotation A-A', un ensemble de masselottes 40.1, 40.2, 40.3 et 40.4, dont les masses (par exemple entre 70 et 140 grammes pour une distance à l'axe de rotation des hélices de 700 mm) et positions angulaires respectives sont déterminées de manière à positionner correctement lesdits centres de gravité.

Plus précisément, les faces internes des parois externes 23 et 33 sont pourvues de coulisses de guidage respectivement 24 et 34, coaxiales auxdites enveloppes de moyeu 22 et 32 et situées dans des plans respectivement D-D' et E-E', orthogonaux à l'axe A-A'. Ces coulisses de guidage 24 et 34 sont aptes à coopérer respectivement avec lesdites masselottes 40.1, 40.2, 40.3 et 40.4, ainsi disposées à l'intérieur des enveloppes de moyeu 22 et 32, de manière que lesdites masselottes, montées mobiles sur lesdites coulisses de guidage, puissent se déplacer le long de celles-ci, jusqu'à être positionnées de façon correcte, de façon à équilibrer le système propulsif 1 à tout instant.

Par la suite, seule sera décrite une masselotte mobile 40 (qui désigne indifféremment l'une des masselottes 40.1 ou 40.2) apte à se déplacer le long de la coulisse de guidage 24, située dans le plan D-D' de l'hélice avant 2, mais il va de soi que ce qui suit peut s'appliquer de façon semblable à des masselottes mobiles aptes à se déplacer le long d'autres coulisses de guidage, dont la coulisse de guidage 34.

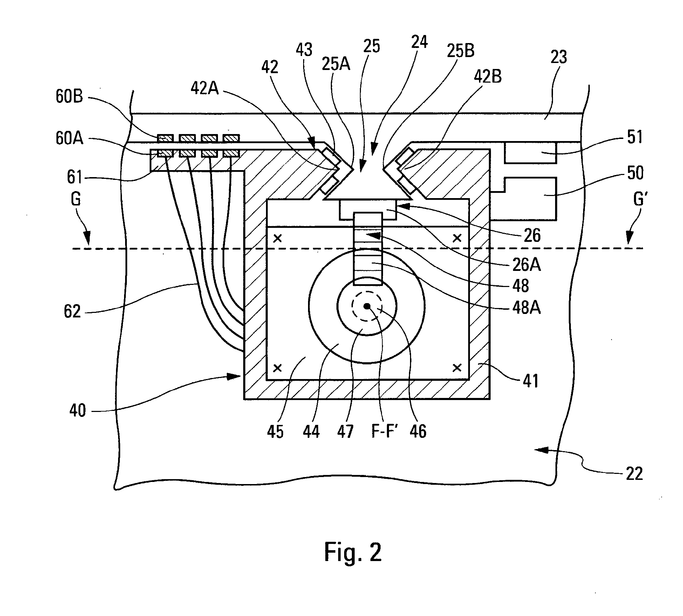

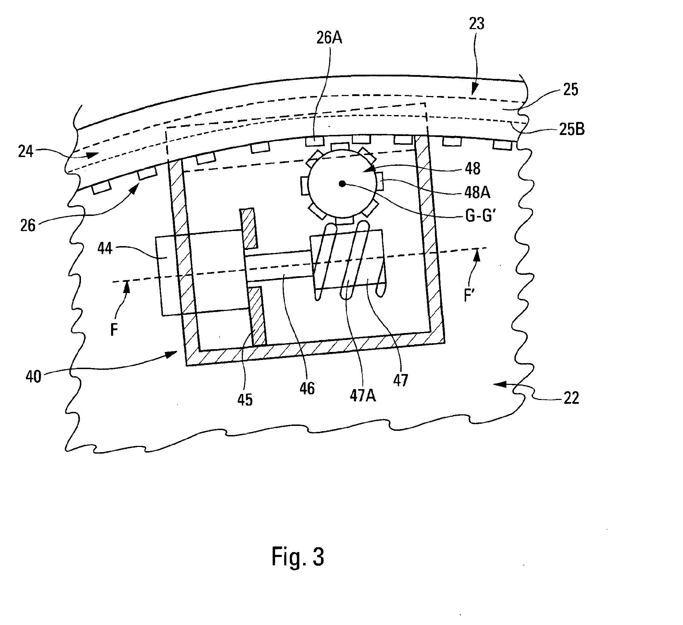

La coulisse de guidage 24, représentée plus en détails sur les figures 2 et 3, comprend une nervure 25 pratiquée au niveau de la face interne de la paroi externe 23. Cette nervure 25, qui fait saillie sur la paroi externe 23 de l'enveloppe de moyeu 22, présente des renfoncements latéraux 25A et 25B respectivement ménagés des deux côtés de ladite nervure 25, lesdits renfoncement 25A et 25B étant aptes à coopérer avec des moyens de maintien 42 prévus sur la masselotte mobile 40. Plus précisément, la masselotte 40 comprenant un boîtier 41 enfermant les éléments qui permettent le déplacement de celle-ci, les moyens de maintien 42 sont disposés dans la partie inférieure dudit boîtier 41, des enfoncements latéraux 42A et 42B étant pratiqués dans cette partie inférieure, en vue de coopérer respectivement avec les renfoncements latéraux 25A et 25B de la nervure 25.

Ainsi, la masselotte mobile 40 peut être maintenue solidaire de la nervure 25 lorsque celle-ci se déplace le long de la coulisse de guidage 24. A ce titre, afin de favoriser une coopération optimale entre les renfoncements latéraux 25A et 25B de la nervure 25 et les enfoncements latéraux 42A et 42B de la masselotte 40, il peut être prévu de disposer des plots d'ajustement (ou système de guidage à recirculation de billes) 43 sur lesdits enfoncements latéraux 42A et 42B.

La coulisse de guidage 24 comprend en outre une crémaillère 26 munie d'un ensemble de dents 26A équidistantes et réparties régulièrement sur la nervure 25, en faisant saillie par rapport à ladite nervure 25 (figure 3).

La masselotte mobile 40 comprend, à l'intérieur de son boîtier 41, un moteur électrique 44 destiné à commander le mouvement de ladite masselotte 40 selon le sens de rotation de celui-ci. Une paroi additionnelle 45 est rendue solidaire à la fois du boîtier 41 et du moteur électrique 44, de sorte que ceux-ci soient couplés l'un avec l'autre. Le moteur électrique 44 est par ailleurs solidaire d'un arbre d'entraînement 46, apte à tourner autour d'un axe F-F' et supportant une vis sans fin 47. Ainsi, lors du fonctionnement du moteur électrique 44, la rotation de celui-ci est transmise à la vis sans fin 47, par l'intermédiaire de l'arbre d'entraînement 46. Par ailleurs, la vis sans fin 47 est pourvue d'un ensemble de cannelures hélicoïdales 47A, qui forme ainsi un filetage.

La masselotte mobile 40 comprend en outre un pignon (ou roue dentée) 48 apte à tourner autour d'un axe G-G', orthogonal à l'axe F-F', et muni d'un ensemble de dents 48A équidistantes. Le pignon 48 est disposé, par rapport à la vis sans fin 47, de manière que ledit pignon 48 engrène avec ladite vis sans fin 47. Ainsi, lorsque la vis sans fin 47 tourne autour de l'axe F-F' sous l'action du moteur électrique 44, les cannelures hélicoïdales 47A de ladite vis sans fin 47 engrènent avec les dents 48A du pignon 48, de façon à transformer la rotation de ladite vis sans fin 47 autour de l'axe F-F' en une rotation dudit pignon 48 autour de l'axe G-G', orthogonal audit axe F-F'.

Le pignon 48, apte à tourner autour de l'axe G-G', est par ailleurs disposé, par rapport à la coulisse de guidage 24, de manière que ledit pignon 48 engrène avec la crémaillère 26 de ladite coulisse. Ainsi, lorsque le pignon 48 tourne autour de l'axe G-G', sous l'effet de la rotation de la vis sans fin 47 avec laquelle il engrène, les roues dentées 48A de celui-ci engrènent avec les dents 26A de la crémaillère 26, de façon à transformer la rotation dudit pignon 48 en une translation de celui-ci le long de ladite crémaillère 26, ce qui permet ainsi de commander le déplacement de la masselotte mobile 40 le long de la coulisse de guidage 24.

De cette manière, le moteur électrique 44 étant commandé de façon à faire tourner l'arbre d'entraînement 46 dans deux sens opposés, le choix de ce sens de rotation conditionne celui de la vis sans fin 47, ainsi que celui du pignon 48, et donc le sens de déplacement du pignon 48 et de la masselotte mobile 40.

On notera que le pas des cannelures hélicoïdales 47A sur la vis sans fin 47 est préférentiellement faible, ceci afin d'éviter que les efforts externes provenant de la crémaillère 26 et à travers le pignon 48 ne puissent pas entraîner en rotation l'arbre 46 autour de l'axe F-F'. La masselotte mobile 40 reste ainsi bloquée sous l'action de tout effort externe, dû par exemple, aux efforts tangentiels d'accélération d'hélice, et ceci même en cas de défaillance du moteur électrique 44.

Par ailleurs, la masselotte mobile 40 étant montée sur la coulisse de guidage 24, au niveau de la paroi externe 23 de l'enveloppe de moyeu 22 mais à l'intérieur de cette dernière, il peut être prévu une trappe sur ladite paroi externe 23, à travers laquelle ladite masselotte mobile 40 est accessible en vue de sa maintenance.

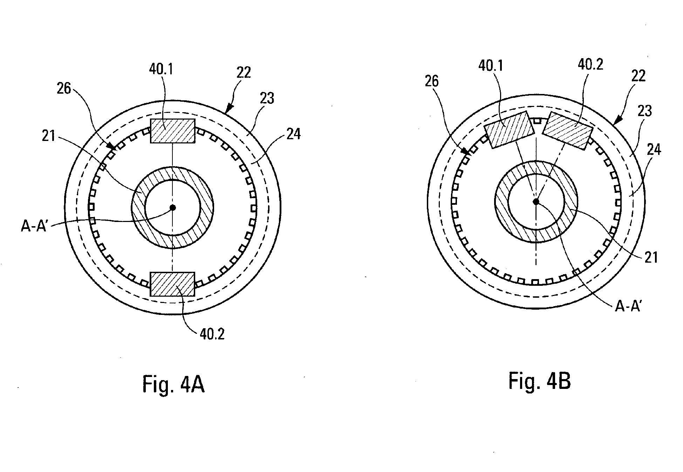

Comme représenté sur les figures 4A et 4B, la disposition d'une pluralité de telles masselottes mobiles sur une même coulisse de guidage 24, par exemple deux masselottes mobiles 40.1 et 40.2 semblables à la masselotte mobile 40 décrite ci-dessus en référence aux figures 2 et 3, permet d'ajouter ponctuellement des masses en vue d'équilibrer les hélices avant 2 et arrière 3, et donc le système propulsif 1 .

A cette fin, les deux masselottes mobile 40.1 et 40.2 peuvent être déplacées sur la coulisse de guidage 24 de manière à atteindre :
- une position extrême pour laquelle les masselottes sont opposées l'une à l'autre (figure 4A), ce qui n'engendre aucun effet de contrepoids, ou
- une position extrême pour laquelle les masselottes sont adjacentes l'une à l'autre (figure 4B), ce qui engendre un effet de contrepoids maximal, ou
- une position intermédiaire à ces deux positions extrêmes, ce qui engendre un effet de contrepoids fonction des positions respectives des masselottes.

On notera qu'il est possible de disposer sur une même coulisse de guidage, conformément à la présente invention, un nombre de masselottes mobiles supérieur à deux, l'effet de contrepoids ainsi produit par celles-ci dépendant alors de leurs positions relatives sur ladite coulisse de guidage.

Afin que le déplacement de la masselotte mobile 40 le long de la coulisse de guidage soit commandé à chaque instant en fonction d'une estimation de l'éventuel balourd que subit le système propulsif 1, la paroi externe 23 de l'enveloppe de moyeu 22 est pourvue d'une graduation angulaire 51 et la masselotte mobile 40 comprend un lecteur de graduation angulaire 50, disposé en regard de la graduation angulaire 51 de ladite paroi externe 23. Ainsi, la position angulaire de la masselotte mobile 40 le long de la coulisse de guidage 40 peut être déterminée.

La coulisse de guidage 24 et la masselotte mobile 40 comprennent en outre des contacts électriques 60A et 60B (quatre de chaque sur la figure 2), solidaires respectivement de ladite masselotte mobile 40 et de la paroi externe 23 de l'enveloppe de moyeu 22. Les contacts électriques 60A sont agencés au niveau d'une protubérance 61, pratiquée sur le boîtier 41 de la masselotte mobile 40, et communiquent avec le moteur électrique 44 par l'intermédiaire de fils électriques 62.

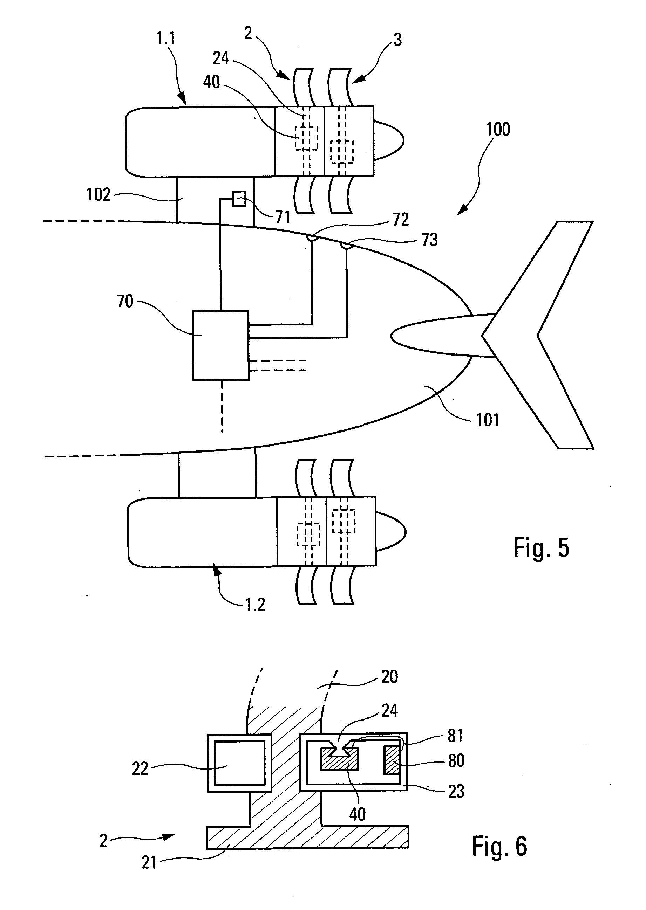

Les contacts électriques annulaires 60B sont connectés à une source d'électricité provenant, par exemple, d'un prélèvement sur le système de dégivrage électrique 80 de l'hélice correspondante (représenté sur la figure 6). L'énergie électrique est alors générée par le système antigivre 80 de l'hélice avant 2, ledit système antigivre 80 étant pour cela relié à ladite masselotte mobile 40 par une liaison électrique 81.

La figure 5 illustre un exemple d'application de la présente invention pour l'équilibrage d'un aéronef 100 équipé, de part et d'autre de sa partie arrière 101, de deux systèmes propulsifs 1.1 et 1.2 semblables au système propulsif 1 décrit ci-dessus en référence aux figures 1 à 3.

Dans cet exemple, l'aéronef 100 est équipé, en ce qui concerne le système propulsif 1.1 (mais cela peut également s'appliquer au système propulsif 1.2), d'un contrôleur électronique 70 apte à commander des moyens de mesure de l'éventuel balourd dudit système propulsif 1.1, et plus particulièrement :
- un accéléromètre 71 destiné à recueillir des informations sur la vibration des hélices 2 et 3, celui-ci étant disposé sur le bras de liaison 102 (entre la partie arrière 101 et le système propulsif 1.1), en direction desdites hélices 2 et 3, et
- deux détecteurs optiques 72 et 73 permettant de déterminer les positions angulaires de chacune des hélices avant 2 et arrière 3.

D'autres moyens de mesure, permettant de déterminer un éventuel écartement angulaire des hélices 2 et 3, peuvent également être utilisés en remplacement (ou en complément) de l'accéléromètre 71 et des deux détecteurs optiques 72 et 73 précités.

Ainsi le contrôleur électronique 70 est apte à déterminer à chaque instant l'éventuel balourd du système propulsif 1.1 et à en déduire les positions angulaires des masselottes mobiles 40 pour lesquelles ce balourd peut être éliminé (ou à tout le moins réduit). Le contrôleur électronique 70 peut alors transmettre aux masselottes mobiles 40 des ordres de positionnement angulaire correspondants, par exemple par des signaux sans fil. Les ordres ainsi transmis par le contrôleur électronique 70 permettent de commander le fonctionnement du moteur électrique 44 (dans l'un des deux sens opposés mentionnés ci-dessus), en prenant en compte, d'une part, les positions angulaires des masselottes mobiles 40 permettant d'éliminer (ou à tout le moins de réduire) l'éventuel balourd, et, d'autre part, les positions angulaires actuelles de ces masselottes, transmises par le lecteur de position angulaire 50 dont chaque masselotte mobile 40 est pourvue.

La présente invention a été décrite ci-dessus pour une masselotte mobile 40 dont la rotation de l'arbre d'entraînement 46 est entraînée par un moteur électrique 44 alimenté par un prélèvement d'énergie sur le système de dégivrage électrique 80 de l'hélice. Toutefois, la source d'électricité peut aussi se présenter sous d'autres formes telles qu'une batterie électrique dont l'autonomie est au moins égale à la durée de fonctionnement du système propulsif 1 pour un cycle de vol. Dès lors, il n'est pas nécessaire de recourir aux contacts électriques 60A et 60B (représentés sur la figure 2).

On notera que d'autres moyens d'alimentation électrique peuvent être également envisagées, par exemple :
- un générateur électrique disposé entre l'hélice avant 2 et l'hélice arrière 3 et utilisant leurs déplacements relatifs comme source d'énergie ;
- un inducteur électromagnétique ; ou
- un convertisseur de gradient thermique en énergie électrique, utilisant les différences de température entre le flux d'air traversant le système propulsif 1 et l'air extérieur, ce qui nécessite une batterie électrique spécifique (qui peut être également installée à l'intérieur de la masselotte mobile 40).

La présente invention a également été décrite ci-dessus pour une coulisse de guidage pour chaque hélice, mais il va de soi que plusieurs coulisses de guidage peuvent être disposées sur une même hélice. En particulier, deux coulisses de guidage peuvent être disposées sur une hélice, respectivement à l'extrémité avant et à l'extrémité arrière de l'enveloppe de moyeu correspondante, ce qui permet de compenser à la fois les forces et les moments aérodynamiques qui sont susceptibles de s'exercer sur les hélices, lorsque le système propulsif 1 est en conditions de vol.

## Revendications

1. Procédé d'équilibrage d'un système propulsif (1, 1.1, 1.2) à au moins deux hélices contrarotatives coaxiales non carénées (2, 3), chacune desdites hélices (2, 3) comportant un moyeu (21, 31) entouré concentriquement par une enveloppe de moyeu (22, 32) et chacune desdites enveloppes de moyeu (22, 32) étant pourvue d'une paroi externe (23, 33), procédé d'équilibrage selon lequel, pour éliminer, ou à tout le moins réduire, un éventuel balourd dudit système propulsif (1, 1.1, 1.2), on rapporte des masselottes (40, 40.1, 40.2, 40.3, 40.4) à des emplacements prévus sur celui-ci,
**caractérisé en ce qu'**au moins l'une desdites masselottes (40, 40.1, 40.2, 40.3, 40.4) est montée mobile sur une coulisse de guidage (24, 34) coaxiale à l'enveloppe de moyeu correspondante (22, 32), le déplacement de ladite masselotte mobile (40, 40.1, 40.2, 40.3, 40.4) le long de ladite coulisse de guidage (24, 34) étant commandé en fonction d'une estimation de l'éventuel balourd dudit système propulsif (1, 1.1, 1.2).

2. Procédé selon la revendication 1,
**caractérisé en ce que** ladite coulisse de guidage (24) comprend une nervure (25) pratiquée sur la paroi externe (23) de l'enveloppe de moyeu correspondante (22).

3. Procédé selon la revendication 1 ou 2,
**caractérisé en ce que** ladite coulisse de guidage (24) présente des renfoncements latéraux (25B, 25C) et ladite masselotte mobile (40) comprend des moyens de maintien (42) de celle-ci à l'intérieur desdits renfoncements latéraux (25B, 25C).

4. Procédé selon l'une des revendications 1 à 3,
**caractérisé en ce que** ladite coulisse de guidage (24) est pourvue d'une crémaillère (26) et ladite masselotte mobile (40) comprend un pignon (48) apte à être engrené avec ladite crémaillère (26), de manière que, par l'intermédiaire de ladite crémaillère (26), la rotation dudit pignon (48) entraîne le déplacement de ladite masselotte mobile (40) le long de ladite coulisse de guidage (24).

5. Procédé selon la revendication 4,
**caractérisé en ce que** ladite masselotte mobile (40) comprend une vis sans fin (47) supportée par un arbre d'entraînement (46) et apte à être engrenée avec ledit pignon (48), de manière que, par l'intermédiaire de ladite vis sans fin (47), la rotation dudit arbre d'entraînement (46) entraîne celle dudit pignon (48).

6. Procédé selon la revendication 5,
**caractérisé en ce que** la vis sans fin (47) est entraînée par un moteur électrique (44).

7. Procédé selon la revendication 5,
**caractérisé en ce que** la vis sans fin (47) est entraînée par une source électrique apte à prélever une partie de l'énergie électrique générée par le système antigivre (80) de l'hélice correspondante (2).

8. Procédé selon l'une des revendications précédentes,
**caractérisé en ce que** le déplacement de ladite masselotte mobile (40, 40.1, 40.2) le long de ladite coulisse de guidage (24) est commandé par des moyens de commande (70) aptes à recevoir des informations sur l'éventuel balourd dudit système propulsif (1), à déterminer la position de chaque masselotte mobile (40, 40.1, 40.2) de façon à éliminer, ou à tout le moins réduire, ledit éventuel balourd et à transmettre à chaque masselotte mobile (40, 40.1, 40.2) l'ordre de déplacement correspondant.

9. Procédé selon l'une des revendications précédentes,
**caractérisé en ce que**, d'une part, la paroi externe (23) de ladite enveloppe de moyeu (22) est pourvue d'une graduation angulaire (51), et, d'autre part, ladite masselotte mobile (40) comprend un lecteur (50) de ladite graduation angulaire (51).

10. Procédé selon l'une des revendications précédentes,
**caractérisé en ce que** deux desdites masselottes (40, 40.1, 40.2, 40.3, 40.4) sont montées mobiles sur une coulisse de guidage (24, 34) coaxiale à l'enveloppe de moyeu correspondante (22), les déplacements respectifs desdites masselottes mobiles (40, 40.1, 40.2, 40.3, 40.4) le long de ladite coulisse de guidage (24, 34) étant commandés en fonction d'une estimation de l'éventuel balourd dudit système propulsif (1).

11. Système propulsif (1, 1.1, 1.2) à au moins deux hélices contrarotatives coaxiales non carénées (2, 3), chacune desdites hélices (2, 3) comportant un moyeu (21, 31) entouré concentriquement par une enveloppe de moyeu (22, 32) et chacune desdites enveloppes de moyeu (22, 32) étant pourvue d'une paroi externe (23, 33), ledit système propulsif (1, 1.1, 1.2) comprenant des masselottes (40, 40.1, 40.2, 40.3, 40.4) rapportées à des emplacements prévus sur celui-ci, pour éliminer, ou à tout le moins réduire, un éventuel balourd dudit système propulsif (1, 1.1, 1.2),
**caractérisé en ce qu'**au moins l'une desdites masselottes (40, 40.1, 40.2, 40.3, 40.4) est montée mobile sur une coulisse de guidage (24, 34) coaxiale à l'enveloppe de moyeu correspondante (22, 32), et incluant des moyens adaptés pour déplacer ladite masselotte mobile (40, 40.1, 40.2, 40.3, 40.4) le long de ladite coulisse de guidage (24, 34) en fonction d'une estimation de l'éventuel balourd dudit système propulsif (1, 1.1, 1.2).

## Patentansprüche

1. Ausgleichsverfahren für ein Antriebssystem (1, 1.1, 1.2) mit mindestens zwei nicht stromlinienförmigen koaxialen gegenläufigen Schrauben (2, 3), wobei jede der Schraube (2, 3) eine Nabe (21, 31) umfasst, die konzentrisch von einer Nabenhülle (22, 32) umgeben ist, und jede der Nabenhüllen (22, 32) mit einer Außenwand (23, 33) versehen ist, wobei bei dem Ausgleichsverfahren zur Beseitigung oder zumindest Verringerung einer möglichen Unwucht des Antriebssystems (1, 1.1, 1.2) Fliehgewichte (40, 40.1, 40.2, 40.3, 40.4) an auf diesem vorgesehenen Stellen angebracht sind,
**dadurch gekennzeichnet, dass** mindestens eines der Fliehgewichte (40, 40.1, 40.2, 40.3, 40.4) beweglich auf einer Führungsschiene (24, 34) koaxial zur entsprechenden Nabenhülle (22, 32) montiert ist, wobei die Verschiebung des beweglichen Fliehgewichts (40, 40.1, 40.2, 40.3, 40.4) entlang der Führungsschiene (24, 34) in Abhängigkeit von einer Schätzung der möglichen Unwucht des Antriebssystems (1, 1.1, 1.2) gesteuert wird.

2. Verfahren nach Anspruch 1,
**dadurch gekennzeichnet, dass** die Führungsschiene (24) eine Rippe (25) aufweist, die an der Außenwand (23) der entsprechenden Nabenhülle (22) vorgesehen ist.

3. Verfahren nach Anspruch 1 oder 2,
**dadurch gekennzeichnet, dass** die Führungsschiene (24) seitliche Verstärkungen (25B, 25C) aufweist und das bewegliche Fliehgewicht (40) Mittel (42) zum Halten desselben im Inneren der seitlichen Verstärkungen (25B, 25C) umfasst.

4. Verfahren nach einem der Ansprüche 1 bis 3,
**dadurch gekennzeichnet, dass** die Führungsschiene (24) mit einer Zahnstange (26) versehen ist und das bewegliche Fliehgewicht (40) ein Ritzel (48) umfasst, das geeignet ist, in die Zahnstange (26) einzugreifen, so dass mit Hilfe der Zahnstange (26) die Drehung des Ritzels (48) zur Verschiebung des beweglichen Fliehgewichts (40) entlang der Führungsschiene (24) führt.

5. Verfahren nach Anspruch 4,
**dadurch gekennzeichnet, dass** das bewegliche Fliehgewicht (40) eine Schnecke (47) umfasst, die von einer Antriebswelle (46) getragen wird und geeignet ist, mit dem Ritzel (48) in Eingriff zu gelangen, so dass mit Hilfe der Schnecke (47) die Drehung der Antriebswelle (46) jene des Ritzels (48) zur Folge hat.

6. Verfahren nach Anspruch 5,
**dadurch gekennzeichnet, dass** die Schnecke (47) von einem Elektromotor (44) angetrieben wird.

7. Verfahren nach Anspruch 5,
**dadurch gekennzeichnet, dass** die Schnecke (47) von einer Stromquelle angetrieben wird, die geeignet ist, einen Teil der von dem Enteisungsschutzsystem (80) der entsprechenden Schraube (2) erzeugten elektrischen Energie zu entnehmen.

8. Verfahren nach einem der vorhergehenden Ansprüche,
**dadurch gekennzeichnet, dass** die Verschiebung des beweglichen Fliehgewichts (40, 40.1, 40.2) entlang der Gleitschiene (24) durch Steuermittel (70) gesteuert wird, die geeignet sind, Informationen über die mögliche Unwucht des Antriebssystems (1) zu empfangen, die Position jedes beweglichen Fliehgewichts (40, 40.1, 40.2) zu bestimmen, um die mögliche Unwucht zu beseitigen oder zumindest zu verringern, und an jedes bewegliche Fliehgewicht (40, 40.1, 40.2) den entsprechenden Verschiebebefehl zu übertragen.

9. Verfahren nach einem der vorhergehenden Ansprüche,
**dadurch gekennzeichnet, dass** einerseits die Außenwand (23) der Nabenhülle (22) mit einer ringförmigen Gradeinteilung (51) versehen ist, und andererseits das bewegliche Fliehgewicht (40) ein Leseelement (50) für die ringförmige Gradeinteilung (51) umfasst.

10. Verfahren nach einem der vorhergehenden Ansprüche,
**dadurch gekennzeichnet, dass** zwei der Fliehgewichte (40, 40.1, 40.2, 40.3, 40.4) beweglich auf einer Führungsschiene (24, 34) koaxial zur entsprechenden Nabenhülle (22) montiert sind, wobei die jeweiligen Verschiebungen der beweglichen Fliehgewichte (40, 40.1, 40.2, 40.3, 40.4) entlang der Führungsschiene (24, 34) in Abhängigkeit von einer Schätzung der möglichen Unwucht des Antriebssystems (1) gesteuert werden.

11. Antriebssystem (1, 1.1, 1.2) mit mindestens zwei nicht stromlinienförmigen koaxialen gegenläufigen Schrauben (2, 3), wobei jede der Schrauben (2, 3) eine Nabe (21, 31) umfasst, die konzentrisch von einer Nabenhülle (22, 32) umgeben ist, und jede der Nabenhüllen (22, 32) mit einer Außenwand (23, 33) versehen ist, wobei das Antriebssystem (1, 1.1, 1.2) Fliehgewichte (40, 40.1, 40.2, 40.3, 40.4) umfasst, die an auf diesem vorgesehenen Stellen angebracht sind, um eine mögliche Unwucht des Antriebssystems (1, 1.1, 1.2) zu beseitigen oder zumindest zu verringern,
**dadurch gekennzeichnet, dass** mindestens eines der Fliehgewichte (40, 40.1, 40.2, 40.3, 40.4) beweglich auf einer Führungsschiene (24, 34) koaxial zur entsprechenden Nabenhülle (22, 32) montiert ist und Mittel umfasst, die geeignet sind, das bewegliche Fliehgewicht (40, 40.1, 40.2, 40.3, 40.4) entlang der Führungsschiene (24, 34) in Abhängigkeit von einer Schätzung der möglichen Unwucht des Antriebssystems (1, 1.1, 1.2) zu verschieben.

## Claims

1. A balancing method for a propulsive system (1, 1.1, 1.2) with at least two coaxial non streamlined contra-rotating propellers (2,3), each of said propellers (2,3) comprising a hub (21,31) concentrically surrounded by a hub envelope (22,32) and each of said hub envelopes (22,32) being provided with an external wall (23,33), said balancing method according to which, to eliminate, or at least to reduce a possible unbalance of said propulsive system (1,1.1,1.2), counterweights (40,40.1,40.2,40.3) are arranged on places provided on the latter,
**characterized in that** at least one of said counterweights (40,40.1,40.2,40.3) is movably mounted on a guiding slot (24,34) being coaxial to the corresponding hub envelope (22,32), the displacement of said mobile counterweight (40,40.1,40.2,40.3), along said guiding slot being (24,34) controlled as a function of an estimation of the possible unbalance of said propulsive system(1,1.1,1.2).

2. The method according to claim 1,
**characterised in that** said guiding slot (24) comprises a rib (25) provided on the external wall (23) of the corresponding hub envelope (22).

3. The method according to any of claims 1 and 2,
**characterized in that** said guiding slot (24) presents side recesses (25B,25C) and said mobile counterweight (40) comprises means (42) for holding the latter inside said side recesses (25B, 25C).

4. The method according to any of claims 1 to 3,
**characterized in that** said guiding slot (24) is provided with a rack (26) and said mobile counterweight (40) comprises a pinion (48) able to be meshed with said rack (26) so that, thru said rack (26), the rotation of said pinion (48) causes the displacement of said mobile counterweight (40) along said guiding slot (24).

5. The method according to claim 4,
**characterized in that** said mobile counterweight (40) comprises an endless screw (47) supported by a driving shaft (46) and able to be meshed with said pinion (48), so that, thru the endless screw (47), the rotation of said driving shaft (46) causes the rotation of said pinion (48).

6. The method according to claim 5,
**characterized in that** the endless screw (47) is driven by an electrical engine (44).

7. The method according to claim 5,
**characterized in that** the endless screw (47) is driven by an electrical source being able to tap a part of the electric power generated by the anti-icing system (80) of the corresponding propeller (2).

8. The method according to any of the preceding claims,
**characterized in that** the displacement of said mobile counterweight (40,40.1,40.2) along said guiding slot (24) is controlled by control means (70) being able to receive information on the possible unbalance of said propulsive system (1), to determine the position of each mobile counterweight (40,40.1,40.2) so as to eliminate, or at least to reduce, said possible unbalance and to transmit to each mobile counterweight (40,40.1,40.2) the corresponding displacement order.

9. The method according to any of the preceding claims,
**characterized in that**, on the one side, the external wall (23) of said hub envelope (22) is provided of an angular graduation (51), and, on the other side, said mobile counterweight (40) includes a reader (50) for said angular graduation (51).

10. The method according to any of the preceding claims,
**characterized in that** two of said counterweights (40,40.1,40.2,40.3,40.4) are movably mounted on a guiding slot (24,34) being coaxial to the corresponding hub envelope (22), the respective displacements of said mobile counterweights (40,40.1,40.2,40.3,40.4) along said guiding slot (24,34) being controlled as a function of an estimation of the possible unbalanced in said propulsive system (1).

11. A propulsive system (1,1.1,1.2) with at least two coaxial non streamlined contra-rotating propellers (2,3), each of said propellers (2,3) comprising a hub (21,31) concentrically surrounded by a hub envelope (22,32) and each of said hub envelopes being provided with an external wall (23,33), said propulsive system (1,1.1,1.2) comprising counterweights (40,40.1,40.2,40.3,40.4) arranged in places provided on the latter so as to eliminate, or at least to reduce, a possible unbalance of said propulsive system (1,1.1, 1.2),
**characterized in that** at least one of said counterweights (40,40.1,40.2,40.3,40.4) is movably mounted on a guiding slot (24,34) being coaxial to the corresponding hub envelope (22,32), and comprising means adapted to displace said mobile counterweight (40,40.1,40.2,40.3,40.4) along said guiding slot (24,34) as a function of an estimation of the possible unbalance in said propulsive system(1,1.1,1.2).
